# EUROPÄISCHE PATENTSCHRIFT

(11) **EP 4 404 101 B1**
(45) Veröffentlichungstag und Bekanntmachung des Hinweises auf die Patenterteilung: **30.09.2026**
(21) Anmeldenummer: 24180889.8
(22) Anmeldetag: 28.04.2022
(51) Int. Cl.: G06K 19/07, G06K 19/077

(54) **KARTENFÖRMIGER DATENTRÄGER SOWIE HALBZEUG UND KONTAKTLAYOUT DAFÜR, UND VERFAHREN ZUR HERSTELLUNG DERSELBEN**
CARD-SHAPED DATA CARRIER, SEMI-FINISHED PRODUCT AND CONTACT LAYOUT FOR SAME, AND METHOD FOR PRODUCING SAME
SUPPORT DE DONNÉES SOUS FORME DE CARTE, PRODUIT SEMI-FINI ET DISPOSITION DE CONTACTS POUR CELUI-CI, ET PROCÉDÉ POUR SA FABRICATION

(30) Priorität: 04.05.2021 DE 102021111570; 20.04.2022 DE 102022109547
(43) Veröffentlichungstag der Anmeldung: 24.07.2024
(62) Dokumentnummer(n) der früheren Anmeldung(en) nach Art. 76 EPÜ: 22726424.9 / 4 334 841
(73) Patentinhaber: Giesecke+Devrient ePayments GmbH, 81677 München (DE)
(72) Erfinder: KLUGE, Stefan, 81677 München (DE)
(74) Vertreter: LKGLOBAL Partnerschaftsgesellschaft mbB

(56) Entgegenhaltungen:
- EP-A1- 3 159 832
- CN-A- 102 629 337
- DE-A1- 10 258 801
- DE-A1- 102012 211 546
- US-A1- 2016 224 882

## Beschreibung

Die Erfindung betrifft allgemein das Gebiet kartenförmiger elektronischer Datenträger, insbesondere Chipkarten, wie beispielsweise Kredit- und Debitkarten, und im Besonderen solche Datenträger, welche zwei elektronische Komponenten aufweisen, die zwar separat im Datenträger angeordnet aber elektrisch miteinander verbunden sind. In diesem Zusammenhang betrifft die Erfindung die Datenträger als solche sowie Halbzeuge und Kontaktlayouts dafür, und Verfahren zu deren Herstellung.

Es ist im Zusammenhang mit kontaktlos kommunizierenden Chipkarten bekannt, den elektronischen Chip ("Microchip") der Chipkarte mit einer im inneren der Chipkarte angeordneten Antennenvorrichtung auszustatten. Dazu ist die Antennenvorrichtung beispielsweise als Spule auf einer im inneren der Karte liegenden Schicht, im sogenannten Karteninlay, verlegt und besitzt zwei Kontaktpads, die mit zwei korrespondierenden Kontaktflächen auf der Unterseite eines den Chip enthaltenden Chipmoduls elektrisch leitend verbunden sind. Zur Herstellung des Kontakts zwischen den Kontaktpads der Antennenspule und den Kontaktflächen des Chipmoduls gibt es verschiedene technische Lösungen. Vielen dieser Lösungen ist gemein, dass das Karteninlay mit einer oder mehreren weiteren Schichten laminiert wird, so dass die die Antennenvorrichtung tragende Oberfläche des Karteninlays im Karteninneren liegt. Anschließend wird eine Kavität in den Kartenkörper gefräst, in welche das Chipmodul eingesetzt wird. Dies ist insbesondere bei sogenannten Dual-Interface-Karten der Fall, bei denen der Chip sowohl kontaktlos über die Antennenvorrichtung, als auch kontaktbehaftet über weitere freiliegende Kontaktflächen des Chipmoduls kommunizieren kann. Bei der Erzeugung der Kavität werden auch die Anschlusspads der Antennenspule freigelegt. Als Verbindung zwischen den Kontaktpads der Antennenspule und den darüber liegenden Kontaktflächen des Chipmoduls kann eine Silikonmasse mit metallischen Partikeln dienen, die nach dem Aushärten elastisch bleibt und dadurch eine zuverlässige Verbindung mit den von oben auf die Silikonmasse aufgesetzten Kontaktflächen des Chipmoduls bildet (sogenannte Flex-Bump-Technologie).

Gemäß einem alternativen Verfahren wird anstelle der Silikonmasse eine elektrisch leitende Lotpaste auf das jeweilige Kontaktpad der Antennenvorrichtung aufgebracht und in einem lokalen Aufschmelzverfahren verflüssigt, so dass sie eine zuverlässige elektrisch leitende Verbindung zu den Kontaktflächen des Chipmoduls herstellt, welche durch Abkühlen des Lots dauerhaft wird (sogenanntes TeConnect-Verfahren). Gemäß einem dritten Verfahren werden die Kontaktpads der Antennenvorrichtung mit einer anisotrop leitenden Folie (ACF) versehen. Dabei handelt es sich um ein heißschmelzfähiges Kunststoffmaterial mit darin verteilten leitfähigen Partikeln, das nur lotrecht zum Kontaktpad elektrisch leitet, so dass die Folie relativ großflächig auch über mehrere Kontaktpads hinweg aufgebracht werden kann, ohne diese Kontaktpads elektrisch kurzzuschließen (sogenannte ACF-Anschlusstechnik).

Anstelle der Antennenvorrichtung oder vielfach in Ergänzung dazu, kann ein elektronischer kartenförmiger Datenträger weitere elektronische Komponenten aufweisen, insbesondere Sensoren wie beispielsweise einen Fingerabdrucksensor Solche Sensoren können zur Identifizierung eines berechtigen Benutzers und zum Freischalten der Karten dienen. Sie müssen genauso wie die Antennenspule mit dem Chip der Chipkarte elektrisch leitend verbunden werden, um mit dem Chip kommunizieren zu können. Dies kann in derselben Weise geschehen, wie zuvor in Bezug auf die Antennenvorrichtung erläutert.

Es sind also ein oder mehrere erste Kontaktpads des Karteninlays zur Kontaktierung einer ersten elektronischen Komponente mit ein oder mehreren zweiten Kontaktpads zur Kontaktierung einer zweiten elektronischen Komponente elektrisch leitend zu verbinden. Anstatt jeweils vollflächige Kontaktpads vorzusehen, die mittels separater Leitungen individuell miteinander verbunden werden, werden zur Reduzierung des Herstellungsaufwands die Kontaktpads und die elektrisch leitenden Verbindungen zwischen den Kontaktpads durch ein und denselben Draht hergestellt, indem der betreffende Draht im Bereich der Kontaktpads mäanderförmig bzw. zick-zackförmig auf dem Karteninlay so verlegt wird, dass das Kontaktpad ausreichend dicht mit dem Draht belegt ist, so dass eine Kontaktierung von oben zuverlässig erfolgen kann. Der Draht wird dabei mittels Unterstützung durch Ultraschall verlegt, so dass er sich in die Oberfläche des Karteninlays eingräbt und die Dicke des Kartenkörpers nicht beeinflusst. Der Draht selbst ist üblicherweise kunststoffbeschichtet, wobei die Kunststoffbeschichtung im Bereich der Kontaktpads beim Freifräsen entfernt wird.

Die EP 3 159 832 A1 beschreibt ein Authentifizierungs-Token, der ein Authentifizierungsmodul und mindestens einen leitenden Draht zur operativen Verbindung des Authentifizierungsmoduls mit mindestens einem weiteren Modul des Tokens umfasst, wobei der mindestens eine leitende Draht in ein nicht leitendes Substrat des Tokens eingebettet ist.

Ausgehend von diesem Stand der Technik stellt sich das Problem, dass bei manchen Anwendungsfällen zwei oder mehrere Kontaktanschlüsse einer elektronischen Komponente miteinander elektrisch kurzgeschlossen werden müssen und zugleich die Verbindung zu einem Kontaktanschluß der anderen elektronischen Komponente geschaffen werden muß. Die den beiden Kontaktanschlüssen der einen elektronischen Komponente zugeordneten zick-zack-förmigen Kontaktpads des Karteninlays durch ein einziges großes zick-zack-förmiges Kontaktpad zu ersetzen oder zwei zick-zack-förmige Kontaktpads und eine dazwischenliegende Verbindungsleitung mittels einem Draht herzustellen, kann zu Problemen führen, weil es aufgrund von Herstellungstoleranzen passieren kann, dass die Kontaktpads beim Fräsen der Kavität für die einzusetzende elektronische Komponente seitlich angefräst werden. Dabei wird dann der Draht durchtrennt und damit auch die elektrisch leitende Verbindung zwischen den beiden Kontaktpads.

Aufgabe der vorliegenden Erfindung ist es daher, in diesem Kontext eine Lösung bereitzustellen, wie in einem kartenförmigen Datenträger mit mehreren miteinander elektrisch leitend verbundenen elektronischen Komponenten zwei Kontaktflächen einer dieser beiden Komponenten und ein Kontaktpad der anderen Komponente in zuverlässiger Weise miteinander elektrisch leitend verbunden werden können.

Eine Lösung für die genannte Aufgabe wird bereitgestellt durch den Gegenstand der jeweiligen unabhängigen Ansprüche. Weitere Ausführungsformen können den jeweiligen abhängigen Ansprüchen entnommen werden. In der vorliegenden Offenbarung werden exemplarische Aspekte beschrieben, die dem Verständnis der Erfindung dienen.

Im Allgemeinen kann ein Kontaktlayout eines entsprechenden mehrschichtigen kartenförmigen Datenträgers ein erstes Kontaktpad zum Anschließen einer ersten elektronischen Komponente und vorzugsweise mindestens zwei zweite Kontaktpads zum Anschließen einer zweiten elektronischen Komponente sowie elektrisch leitende Verbindungen einerseits zwischen dem ersten Kontaktpad und einem ersten der zweiten Kontaktpads und andererseits zwischen dem ersten der zweiten Kontaktpads und einem zweiten der zweiten Kontaktpads aufweisen. Dabei sind die genannten Kontaktpads jeweils durch einen mäanderförmig verlaufenden Draht gebildet und werden nachfolgend auch als Drahtpads bezeichnet.

Gemäß einem ersten exemplarischen Aspekt der vorliegenden Offenbarung, der dem Verständnis der beanspruchten Erfindung dient, wird dazu ein durchgehender Draht verwendet, der sowohl die genannten Kontaktpads als auch die elektrisch leitende Verbindung bildet. Dieser Draht ist in dem ersten der zweiten Kontaktflächen als Doppelmäander verlegt, nämlich vorzugsweise so, dass ein erster Teil des Drahts in einer ersten Richtung aneinander gereihte erste Mäanderschleifen bildet und ein daran anschließender zweiter Teil des durchgehenden Drahts in einer entgegengesetzten Durchlaufrichtung aneinandergereihte zweite Mäanderschleifen bildet, wobei die ersten und zweiten Mäanderschleifen ineinander verschachtelt sind. Die ineinandergreifende Hin- und Rückführung des doppelmäanderartig verlegten Drahts bildet eine "Interdigitalstruktur". Mittels des Doppelmäanders ist ein Drahtverlauf im Drahtpad derart möglich, dass das in das Kontaktpad einlaufende Ende des Drahts und das aus dem Kontaktpad herausführende Ende des Drahts am gleichen Ende des Kontaktpads liegen. Wenn das Kontaktpad dann so in dem Kartenkörper angeordnet wird, dass das entsprechend gegenüberliegende Ende des Kontaktpads der auszufräsenden Kavität zugewandt ist, schadet es der elektrischen Verbindung zwischen dem ersten und dem zweiten Kontaktpad nicht, wenn das doppelmäanderförmige Kontaktpad beim Ausfräsen der Kavität angefräst wird. Denn dadurch, dass beim Kontaktieren des doppelmäanderartig verlegten Kontaktpads mit einer zugehörigen Kontaktfläche der (zweiten) elektronischen Komponente immer auch eine elektrische Verbindung zwischen dem in das Kontaktpad hineinführenden Ende des Drahts und dem aus dem Kontaktpad herausführenden Ende des Drahts hergestellt wird, ist eine Unterbrechung des Drahts im Bereich des Kontaktpads unkritisch.

Ein entsprechendes Verfahren zum Herstellen dieses Kontaktlayouts umfasst dementsprechend die folgenden Schritte:
- Bereitstellen eines Kunststoffsubstrats und
- Verlegen eines durchgehenden Drahts auf dem Kunststoffsubstrat zum Erzeugen von mindestens einem ersten Kontaktpad zum Anschließen einer ersten elektronischen Komponente und mindestens zwei zweiten Kontaktpads zum Anschließen einer zweiten elektronischen Komponente, wobei der Draht in den genannten Kontaktpads jeweils mäanderförmig verlegt wird, und zum Erzeugen einer elektrisch leitenden Verbindung zwischen dem ersten Kontaktpad und einem ersten der zweiten Kontaktpads einerseits und zwischen dem ersten der zweiten Kontaktpads und einem zweiten der zweiten Kontaktpads andererseits, wobei der durchgehende Draht in dem ersten der zweiten Kontaktflächen als Doppelmäander verlegt wird, nämlich vorzugsweise so, dass ein erster Teil des durchgehenden Drahts in einer ersten Richtung aneinandergereihte erste Mäanderschleifen bildet und ein daran anschließender Teil des durchgehenden Drahts in einer entgegengesetzten Richtung aneinandergereihte zweite Mäanderschleifen bildet, wobei die ersten und zweiten Mäanderschleifen ineinander verschachtelt sind.

Gemäß einem zweiten exemplarischen Aspekt der vorliegenden Offenbarung, der dem Verständnis der beanspruchten Erfindung dient, werden die Kontaktpads zum Anschließen der ersten und zweiten elektronischen Komponenten sowie die elektrisch leitenden Verbindungen zwischen den Kontaktpads durch zwei durchgehende Drähte gebildet. Der erste durchgehende Draht bildet das (mindestens eine) erste Kontaktpad für die erste elektronische Komponente und das erste der (mindestens zwei) zwei Kontaktpads für die zweite elektronische Komponente sowie eine Verbindungsleitung zwischen diesen beiden Kontaktpads. Der zweite Draht bildet das zweite der zweiten Kontaktpads und eine daraus herausgeführte Anschlussleitung. Zusätzlich ist ein elektrisch leitendes Verbindungselement vorgesehen, das die vom ersten Draht gebildete Verbindungsleitung und die vom zweiten Draht gebildete Anschlussleitung "überlagert" und elektrisch leitend miteinander verbindet. Dabei kann das elektrisch leitende Verbindungselement den Bereich der Verbindungsleitung des ersten durchgehenden Drahts und den Bereich der Anschlussleitung des zweiten durchgehenden Drahts von oben überdecken. Alternativ kann das elektrisch leitende Verbindungselement zuerst auf dem Karteninlay vorgesehen werden und sowohl das Verlegen des ersten durchgehenden Drahts im Bereich der Verbindungsleitung als auch das Verlegen des zweiten durchgehenden Drahts im Bereich der Anschlussleitung, jeweils über das elektrisch leitende Verbindungselement hinweg erfolgen, so dass das elektrisch leitende Verbindungselement unter dem durchgehenden Draht und der Anschlussleitung liegt.

Vorzugsweise ist dabei das elektrisch leitende Verbindungselement metallisch, insbesondere Kupfer, und die elektrisch leitende Verbindung zwischen dem elektrisch leitenden Verbindungselement und der Verbindungsleitung des ersten durchgehenden Drahts einerseits und zwischen dem elektrisch leitenden Verbindungselement und der Anschlussleitung des zweiten durchgehenden Drahts andererseits ist eine Schweißverbindung. Die Schweißverbindung wiederum ist vorzugsweise eine Thermokompressionsschweißverbindung, bei der Metall auf Metall geschweißt wird, indem das metallische elektrisch leitende Verbindungselement jeweils mit dem betreffenden Draht verschweißt wird. Das Thermokompressionsschweißen erfolgt wiederum vorzugsweise mittels Unterstützung durch Ultraschall. Dabei werden sowohl eine etwaige Kunststoffummantelung der Drähte als auch eine etwaige Oxidschicht des metallischen elektrisch leitenden Verbindungselements weggerieben, bevor die Elemente letztlich miteinander verschweißen.

Besonders bevorzugt ist es in diesem Zusammenhang, wenn der Bereich der Verbindungsleitung des ersten durchgehenden Drahts und der Bereich der Anschlussleitung des zweiten durchgehenden Drahts, die mittels des elektrisch leitenden Verbindungselements miteinander verbunden werden sollen, so nahe beieinander liegen, dass die elektrisch leitende Verbindung zwischen dem Verbindungselement und der Verbindungsleitung einerseits und zwischen dem Verbindungselement und der Anschlussleitung andererseits als eine gemeinsame Verbindungsstelle ausgebildet werden kann, insbesondere als eine durchgehende Schweißverbindung, welche vorteilhaft in einem einzigen Prozessschritt, z.B. durch Thermokompressionsschweißen, erzeugt werden kann.

Als Verbindungselement dient vorzugsweise ein dünnes Kupferelement oder ein anderes elektrisch leitendes Element, besonders bevorzugt eine metallisierte Folie, z.B. eine PVC-Folie oder eine andere geeignete Kunststofffolie.

Ein entsprechendes Verfahren zum Herstellen des vorbeschriebenen Kontaktlayouts kann die folgenden Schritte umfassen:
- Bereitstellen eines Kunststoffsubstrats,
- Verlegen eines ersten durchgehenden Drahts auf dem Kunststoffsubstrat zum Erzeugen von mindestens einem ersten Kontaktpad zum Anschließen einer ersten elektronischen Komponente und einem ersten von mindestens zwei zweiten Kontaktpads zum Anschließen einer zweiten elektronischen Komponente und zum Erzeugen einer Verbindungsleitung zwischen diesen beiden Kontaktpads, wobei der erste durchgehende Draht in den genannten Kontaktpads jeweils mäanderförmig verlegt wird,
- Verlegen eines zweiten durchgehenden Drahts auf dem Kunststoffsubstrat zum Erzeugen eines zweiten der zweiten Kontaktpads und einer daraus herausführenden Anschlussleitung, wobei der zweite durchgehende Draht in dem zweiten der zweiten Kontaktpads mäanderförmig verlegt wird,
- Aufbringen eines elektrisch leitenden Verbindungselements derart, dass es entweder sowohl einen Bereich der Verbindungsleitung des ersten durchgehenden Drahts als auch einen Bereich der Anschlussleitung des zweiten durchgehenden Drahts überdeckt oder dass sowohl das Verlegen des ersten durchgehenden Drahts im Bereich der Verbindungsleitung als auch das Verlegen des zweiten durchgehenden Drahts im Bereich der Anschlussleitung erst nach dem Aufbringen des elektrisch leitenden Verbindungselements und jeweils über das elektrisch leitende Verbindungselement erfolgt, und
- elektrisch leitendes Verbinden des elektrisch leitenden Verbindungselements sowohl mit dem ersten durchgehenden Draht im Bereich der Verbindungsleitung als auch mit dem zweiten durchgehenden Draht im Bereich der Anschlussleitung.

Auch ein dritter exemplarischer Aspekt der vorliegenden Offenbarung, der ebenfalls dem Verständnis der beanspruchten Erfindung dient, sieht vor, dass die Kontaktpads und die elektrisch leitenden Verbindungen dazwischen mittels zwei durchgehender Drähte erzeugt werden. Genau wie bei dem vorbeschriebenen zweiten Aspekt bildet der erste durchgehende Draht das (mindestens eine) erste Kontaktpad für die erste elektronische Komponente und das erste der (mindestens zwei) zweiten Kontaktpads für die zweite elektronische Komponente sowie eine Verbindungsleitung zwischen diesen beiden Kontaktpads. Und genau wie bei dem zweiten Aspekt bildet der zweite Draht das zweite der zweiten Kontaktpads und eine daraus herausgeführte Anschlussleitung. Anders als bei dem zweiten Aspekt wird die elektrisch leitende Verbindung aber nicht mittels eines zusätzlichen elektrisch leitenden Verbindungselements hergestellt, sondern stattdessen bildet der erste durchgehende Draht ein zusätzliches mäanderförmiges Kontaktpad in einem Bereich seiner Verbindungsleitung, und dieses zusätzliche mäanderförmige Kontaktpad überlappt mit der durch den zweiten Draht gebildeten Anschlussleitung. Die elektrisch leitende Verbindung zwischen dem zweiten Draht und dem ersten Draht im Bereich des zusätzlichen mäanderförmigen Kontaktpads ist wieder vorzugsweise eine Thermokompressionsschweißverbindung, bei der die Drähte unmittelbar miteinander verschweißt werden, gegebenenfalls wiederum mittels Unterstützung durch Ultraschall.

Um die Sichtbarkeit des zusätzlichen Kontaktpads in der fertigen Karte zu verringern, wird das zusätzliche Kontaktpad vorzugsweise zu dem angrenzenden Kontaktpad für die zweite elektronische Komponente oder zu dem angrenzenden Kontaktpad für die erste elektronische Komponente hin verschoben, so dass diese beiden Kontaktpads zusammen ein großes Kontaktpad bilden, welches vorzugsweise mindestens 50 % größer ist, als ein normales Kontaktpad, insbesondere als das andere Kontaktpad für die zweite elektronische Komponente bzw. als ein anderes oder alle anderen Kontaktpads für die erste elektronische Komponente. In diesem Zusammenhang ist es von Vorteil, wenn die durch das zusätzliche mäanderförmige Kontaktpad gebildete Vergrößerung des betreffenden Kontaktpads sich in einer Richtung weg von dem Anbringungsort der zugehörigen elektronischen Komponente erstreckt. Dadurch wird sichergestellt, dass das zusätzliche mäanderförmige Kontaktpad beim Erzeugen der Kavität für die elektronische Komponente nicht beschädigt wird.

Ein entsprechendes Verfahren zum Herstellen des vorbeschriebenen Kontaktlayouts kann die folgenden Schritte umfassen:
- Bereitstellen eines Kunststoffsubstrats,
- Verlegen eines ersten durchgehenden Drahts auf dem Kunststoffsubstrat zum Erzeugen von mindestens einem ersten Kontaktpad zum Anschließen einer ersten elektronischen Komponente und einem ersten von mindestens zwei zweiten Kontaktpads zum Anschließen einer zweiten elektronischen Komponente und zum Erzeugen einer Verbindungsleitung zwischen diesen beiden Kontaktpads, wobei der erste durchgehende Draht in den genannten Kontaktpads jeweils mäanderförmig verlegt wird und in einem Bereich der Verbindungsleitung ein zusätzliches mäanderförmiges Kontaktpad bildet,
- Verlegen eines zweiten durchgehenden Drahts auf dem Kunststoffsubstrat zum Erzeugen eines zweiten der zweiten Kontaktpads und einer daraus herausführenden Anschlussleitung, wobei der zweite durchgehende Draht in dem zweiten der zweiten Kontaktpads mäanderförmig verlegt wird, und wobei der erste und der zweite durchgehende Draht so verlegt werden, dass die durch den zweiten durchgehenden Draht gebildete Anschlussleitung und das durch den ersten durchgehenden Draht gebildete zusätzliche mäanderförmige Kontaktpad einander überlappen, und
- elektrisch leitendes Verbinden der durch den zweiten durchgehenden Draht gebildeten Anschlussleitung und des durch den ersten durchgehenden Draht gebildeten zusätzlichen mäanderförmigen Kontaktpads im Überlappungsbereich.

Alternativ kann auf das zusätzliche Drahtpad auch verzichtet werden und die Anschlussleitung unmittelbar dem ersten der zweiten Kontaktpads oder dem mindestens einem ersten Kontaktpad überlagert werden, und die elektrisch leitende Verbindung im Überlagerungsbereich erfolgen.

Gemäß einem Aspekt der vorliegenden Offenbarung, der Ausführungsformen der beanspruchten Erfindung beschreibt, wird die elektrisch leitende Verbindung zwischen den beiden Kontaktpads für die zweite elektronische Komponente durch ein elektrisch leitendes Lotmaterial gebildet, welches diese beiden Kontaktpads vorzugsweise in direkter Linie miteinander verbindet.

Das bietet sich besonders für die Herstellung solcher kartenförmiger Datenträger im eingangs genannten TeConnect-Verfahren oder ähnlichen Verfahren an, bei denen ohnehin elektrisch leitendes Lotmaterial, insbesondere eine Lotpaste, zur Verbindung der Kontaktpads auf dem Karteninlay mit den korrespondierenden Kontaktflächen der zugehörigen elektronischen Komponenten eingesetzt wird. Dann kann die elektrisch leitende Verbindung zwischen einzelnen Kontaktpads für eine dieser elektronischen Komponenten auf dem Karteninlay gleichzeitig erzeugt werden, wenn auch das Lotmaterial für die Verbindung der Karteninlay-Kontaktpads mit den Kontaktflächen der elektronischen Komponenten aufgebracht wird.

Ein entsprechendes Verfahren zum Herstellen des vorbeschriebenen Kontaktlayouts kann die folgenden Schritte umfassen:
- Bereitstellen eines Kunststoffsubstrats,
- Verlegen eines ersten durchgehenden Drahts auf dem Kunststoffsubstrat zum Erzeugen von mindestens einem ersten Kontaktpad zum Anschließen einer ersten elektronischen Komponente und einem ersten von mindestens zwei zweiten Kontaktpads zum Anschließen einer zweiten elektronischen Komponente und zum Erzeugen einer Verbindungsleitung zwischen diesen beiden Kontaktpads, wobei der erste durchgehende Draht in den genannten Kontaktpads jeweils mäanderförmig verlegt wird,
- Verlegen eines zweiten durchgehenden Drahts auf dem Kunststoffsubstrat zum Erzeugen eines zweiten der zweiten Kontaktpads, wobei der zweite durchgehende Draht in dem zweiten der zweiten Kontaktpads mäanderförmig verlegt wird,
- Erzeugen einer elektrisch leitenden Verbindung zwischen dem ersten der zweiten Kontaktpads und dem zweiten der zweiten Kontaktpads, indem eine diese beiden Kontaktpads direkt verbindende Linie aus einem elektrisch leitenden Lotmaterial, insbesondere einer Lotpaste, aufgebracht wird.

Gemäß einem weiteren Aspekt der vorliegenden Offenbarung, der ebenfalls Ausführungsformen der beanspruchten Erfindung beschreibt, werden nicht zwei Kontaktpads für die zweite elektronische Komponente miteinander elektrisch leitend verbunden, sondern stattdessen werden zwei Kontaktflächen der elektronischen Komponente selbst elektrisch verbunden. Das Kontaktlayout auf dem Karteninlay umfasst dazu wiederum ein erstes Kontaktpad zum Anschließen einer ersten elektronischen Komponente und mindestens ein zweites Kontaktpad zum Anschließen einer zweiten elektronischen Komponente sowie eine elektrisch leitende Verbindung zwischen dem ersten Kontaktpad und dem zweiten Kontaktpad. Die genannten Kontaktpads sind vorzugsweise wieder jeweils durch einen mäanderförmig verlaufenden Draht gebildet. Die zweite elektronische Komponente weist mindestens zwei Kontaktflächen auf, welche kurzgeschlossen werden sollen. Dazu ist eine elektrisch leitende Verbindung zwischen den beiden Kontaktflächen der zweiten elektronischen Komponente mittels eines elektrisch leitenden Materials vorgesehen, welches auf die beiden Kontaktflächen aufgebracht ist und diese direkt miteinander verbindet. Die elektrische Verbindung wird also an der betreffenden elektronischen Komponente vorkonfektioniert, bevor sie in den Kartenkörper eingesetzt wird, und wird nicht auf dem Karteninlay erzeugt.

Dieser weitere Aspekt der vorliegenden Offenbarung eignet sich insbesondere für die Herstellung von Karten, bei denen die Kontaktierung zwischen den Kontaktpads auf dem Karteninlay und den zugehörigen Kontaktflächen der elektronischen Komponenten mittels einer anisotrop leitenden Folie erfolgt (ACF-Anschlusstechnik). Bei dem die beiden Kontaktflächen der zweiten elektronischen Komponente direkt verbindenden, elektrisch leitendenden Material handelt es sich vorzugsweise um einen, vorzugsweise unisolierten, Draht oder alternativ um eine Linie aus isotroper Leitpaste, die gegebenenfalls aushärten muss, oder eine Linie aus einem isotrop leitfähigen Kunstsoff. Letztere Alternativen haben den Vorteil, dass sie geringere Auswirkungen auf die Dicke des zu fertigenden Kartenkörpers haben.

Das Ergebnis ist in jedem Falle ein Halbzeug, welches das Kontaktlayout und zumindest die zweite elektronische Komponente umfasst, welche vorzugsweise mittels einer ACF-Folie miteinander elektrisch leitend verbunden sind.

Ein Verfahren zur Herstellung des vorbeschriebenen Halbzeugs gemäß dem fünften Aspekt der vorliegenden Offenbarung kann die folgenden Schritte umfassen:
- Bereitstellen eines Kunststoffsubstrats,
- Verlegen eines durchgehenden Drahts auf dem Kunststoffsubstrat zum Erzeugen von mindestens einem ersten Kontaktpad zum Anschließen einer ersten elektronischen Komponente und einem zweiten Kontaktpad zum Anschließen einer zweiten elektronischen Komponente und zum Erzeugen einer Verbindungsleitung zwischen diesen beiden Kontaktpads, wobei der durchgehende Draht in den genannten Kontaktpads vorzugsweise jeweils mäanderförmig verlegt wird und wobei die zweite elektronische Komponente mindestens zwei Kontaktflächen besitzt, und
- Erzeugen einer elektrisch leitenden Verbindung zwischen den beiden Kontaktflächen der zweiten elektronischen Komponente durch Aufbringen eines elektrisch leitenden Materials auf den beiden Kontaktflächen der zweiten elektronischen Komponente, welches diese direkt miteinander verbindet.

Das Kontaktlayout bzw. die Oberfläche der Kunststoffschicht auf der das Kontaktlayout vorbereitet ist, liegt bei allen Ausführungsformen letztlich als Karteninlay im Inneren des finalen mehrschichtigen kartenförmigen Datenträgers. Dazu wird die Karteninlayschicht mit weiteren Schichten laminiert, nämlich mindestens einer das Kontaktlayout bedeckenden Artworkschicht, die mit einem Design und Informationen bedruckt oder in anderer Weise versehen ist, und, soweit die Rückseite der Karteninlayschicht mit ähnlichem Design oder Informationen versehen ist, vorzugsweise einer entsprechenden Artworkschicht auf der Rückseite der Karteninlayschicht. Gegebenenfalls kann darüber jeweils noch eine transparente Schutzschicht entweder als transparente Folie oder als transparenter Schutzlack vorgesehen werden, um so insgesamt den mehrschichtigen Kartenkörper für den kartenförmigen Datenträger zu bilden, in welchem das Kontaktlayout und die dadurch miteinander elektrisch verbundenen elektronischen Komponenten integriert werden.

Die vorbeschriebenen Verfahren eignen sich auch dafür, entsprechende Mehrnutzenbogen zur Herstellung einer größeren Anzahl von beispielsweise 24 oder 48 kartenförmigen Datenträgern herzustellen. Im Zusammenhang mit dem vorbeschriebenen zweiten Aspekt, bei dem zwei Drähte mittels eines elektrisch leitenden Verbindungselements verbunden werden, können in einem entsprechenden Mehrnutzenbogen eine entsprechende Vielzahl von Bereichen eines Mehrnutzenbogens, beispielsweise einer PVC-Folie, mit einem geeigneten Metall, insbesondere Kupfer, beschichtet sein, nämlich pro Karte des Mehrnutzenbogens mindestens ein solcher metallisch beschichteter Bereich.

Weitere Vorteile, Merkmale und Einzelheiten ergeben sich aus der nachfolgenden Beschreibung bevorzugter Ausführungsformen sowie anhand der Zeichnungen. Dabei zeigen:
- Fig. 1: eine Chipkarte schematisch in Aufsicht,
- Fig. 2A: eine Schnittdarstellung der in Fig. 1 dargestellten Chipkarte (für z.B. TeConnect oder Flex-Bump),
- Fig. 2B: eine Schnittdarstellung der in Fig. 1 dargestellten Chipkarte (für z.B. ACF),
- Fig. 3: ein Kontaktlayout gemäß einem ersten Aspekt der Offenbarung,
- Figuren 4 und 5: zwei Varianten eines Kontaktlayouts gemäß einem zweiten Aspekt der vorliegenden Offenbarung,
- Fig. 6A und 6B: zwei Kontaktlayouts gemäß einem dritten Aspekt der vorliegendenden Offenbarung,
- Fig. 7: ein Kontaktlayout gemäß einem vierten Aspekt der vorliegenden Offenbarung, und
- Figuren 8a, 8b: zwei Alternativen einer elektronischen Komponente.
- Figur 9: einer mittels der in Fig. 8a oder 8b dargestellten Komponente hergestellte Chipkarte.

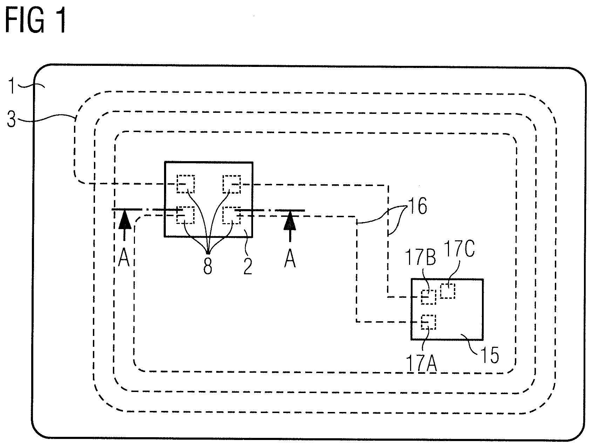

Die nachfolgende Erläuterung in Bezug auf die begleitenden Zeichnungen betrifft die Herstellung von kartenförmigen Datenträgern, insbesondere mehrschichtigen kartenförmigen Datenträgern, mit mindestens zwei elektronischen Komponenten, beispielsweise eine Chipkarte mit einem herkömmlichen Chip und einer oder mehreren elektronischen Komponenten, wie beispielsweise einem Fingerabdrucksensor oder einem Irissensor oder anderen Sensoren zur Authentisierung eines Kartennutzers. In diesem Kontext zeigt die Figur 1 einen solchen Datenträger schematisch in Aufsicht, Der Kartenkörper 1 dieser Chipkarte enthält ein Spulenelement 3, das als Sende- und Empfangsantenne für einen figürlich nicht dargestellten, integrierten Schaltkreis eines Chipmoduls 2 dient. Das Spulenelement 3 ist bei dem in Figur 1 dargestellten Ausführungsbeispiel vollständig in den Kartenkörper eingebettet. Zur Veranschaulichung der Lage des Spulenelements 3 im Kartenkörper ist das Spulenelement 3 in Figur 1 schematisch durch eine gestrichelte Linie dargestellt. Das Chipmodul 2 ist in einer Aussparung des Kartenkörpers eingesetzt und über Kontaktflächen 8, die auf der Unterseite des Chipmoduls 2 vorgesehen sind, mit dem Spulenelement 3 elektrisch verbunden.

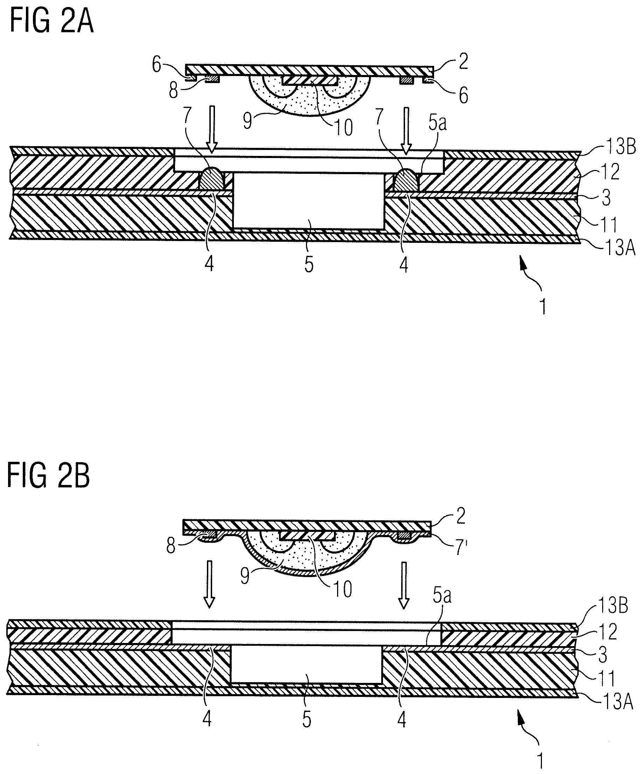

Figur 2A zeigt die in Figur 1 dargestellte Chipkarte in einer Schnittdarstellung beim Einsetzen des Chipmoduls 2 in eine zweistufige Kavität 5 des Kartenkörpers 1. Der Schnitt wurde entlang der in Figur 1 eingezeichneten Linie A-B gelegt. Zur besseren Veranschaulichung der Details ist nicht die gesamte Chipkarte dargestellt, sondern lediglich ein vergrößerter Ausschnitt der Chipkarte. Der Kartenkörper 1 ist mehrschichtig aufgebaut und umfasst zumindest ein Karteninlay 11 mit dem darauf angeordneten Spulenelement 3 einschließlich Kontaktpads 4, eine Deckschicht 12, die als Artworkschicht ausgebildet sein kann und dementsprechend beispielsweise auf ihrer Oberseite bedruckt ist, sowie optional transparente Schutzschichten 13A, 13B, welche hier die außenliegenden Schichten des Kartenkörpers bilden. Die Schutzschichten 13A, 13B können als Lackschicht oder als Folie vorgesehen sein. Die Inlayschicht 11 kann rückseitig genau wie die Deckschicht 12 als Artworkschicht ausgeführt sein oder es kann eine zusätzlich Artworkschicht zwischen der Inlayschicht 11 und der unteren Schutzschicht 13A vorgesehen sein. Die Folienschichten 11 und 12 können ihrerseits aus mehreren einzelnen Folienschichten bestehen.

In dem Kartenkörper 1 ist eine zweistufige Aussparung 5 mit einem Schulterbereich 5a eingefräst, in welche das Chipmodul 2 von oben eingesetzt wird. Dabei wird das Chipmodul 2 typischerweise innerhalb der geltenden technischen Toleranzen so in die Aussparung 5 eingepasst, dass die Oberfläche des Chipmoduls 2 mit der Oberfläche des Kartenkörpers 1 fluchtet und die Kontaktflächen 8 auf der Unterseite des Chipmoduls 2 gegenüber den durch Fräsen freigelegten und dabei teilweise abgetragenen Kontaktpads 4 des Spulenelements 3 zu Liegen kommen. Die Aussparung 5 ist so dimensioniert, dass sie das Chipmodul 2 samt einer Vergußmasse 9, die einen integrierten Schaltkreis 10 umgibt, aufnehmen kann. Die mechanische Verbindung zwischen dem Chipmodul 2 und dem Kartenkörper 1 kann beispielsweise mit Hilfe eines thermoaktivierbaren Klebers 6 hergestellt.

Die elektrische Verbindung zwischen dem Chipmodul 2 und dem im Kartenkörper 1 enthaltenen Spulenelement 3 kann mittels eines leitfähigen Elastomers 7 erfolgen (z.B. Flex-Bump von Mühlbauer), der auf die Kontaktpads 4 des Spulenelements 3 oder, wie hier, typischerweise auf die Kontaktflächen 8 des Chipmoduls 2 aufgebracht ist.

Bei dem leitfähigen Elastomer handelt es sich vorzugsweise um eine Silikonmasse mit metallischen Partikeln, die nach dem Aushärten elastisch bleibt und dadurch eine zuverlässige elektrisch leitende Verbindung mit den von oben auf der Silikonmasse aufliegenden Kontaktflächen 8 des Chipmoduls 2 bildet (sogenannte Flex-Bump-Technologie).

Anstelle der Silikonmasse kann eine elektrisch leitende Lötpaste auf das jeweilige Kontaktpad 4 des Spulenelements 3 aufgebracht und in einem lokalen Aufschmelzverfahren verflüssigt werden, sodass die Lötpaste eine zuverlässige elektrisch leitende Verbindung zu den Kontaktflächen 8 des Chipmoduls 2 herstellt, welche durch Abkühlen des Lots dauerhaft wird (TeConnect-Verfahren).

Gemäß einem weiteren alternativen Verfahren werden die Kontaktpads 4 des Spulenelements 3 mit einer anisotrop leitenden Folie 7' (ACF-Folie) versehen. Der entsprechende Kartenaufbau ist in Figur 2B gezeigt. Hier wird die Vertiefung bis auf die Drahtebene 3 hinab gefräst. Bei der ACF-Folie 7' handelt es sich um ein heißschmelzfähiges Kunststoffmaterial mit darin verteilten leitfähigen Partikeln, wodurch die Folie nur lotrecht zum Kontaktpad 4 elektrisch leitet, sodass die Folie großflächig auch über mehrere Kontaktpads 4 hinweg aufgebracht werden kann, ohne diese Kontaktpads 4 elektrisch kurzzuschließen. Die ACF-Folie 7' wird typischerweise flächig auf der Unterseite des Chipmoduls aufgebracht.

Von besonderer Bedeutung für die vorliegende Offenbarung ist jedoch, dass in dem Kartenkörper 1 des kartenförmigen Datenträgers nicht nur eine elektronische Komponente, wie beispielsweise das Chipmodul 2, sondern noch eine weitere elektronische Komponente 15, wie beispielsweise ein Fingerabdrucksensor, vorgesehen ist. Die zweite elektronische Komponente kann in der selben Weise in den Kartenkörper integriert werden, wie dies zuvor im Zusammenhang mit dem Chipmodul 2 in Bezug auf Figur 2A bzw.Figur 2B erläutert wurde. Insoweit zeigt Figur 1 zwei Kontaktflächen 17A, 17B der zweiten elektronischen Komponente 15, die über elektrisch leitende Verbindungen 16 jeweils mit einem der Kontaktflächen 8 verbunden wird.

Figur 1 zeigt darüber hinaus eine weitere Kontaktfläche 17C auf der Unterseite der zweiten elektronischen Komponente 15, entsprechend den Kontaktflächen 8 der Chipmoduls 2 in Figur 2A. In den nachfolgend beschriebenen verschiedenen Aspekten geht es darum, eine elektrisch leitende Verbindung zwischen den Kontaktflächen 17B und 17C der zweiten elektronischen Komponente 15 herzustellen. Dabei ist allen nachfolgend beschriebenen Ausführungsbeispielen gemeinsam, dass das Kontaktlayout auf der Inlayschicht 11 durch Drähte gebildet wird, die in die Oberfläche der Inlayschicht 11 eingebettet sind. Dazu wird der Draht auf der Inlayschicht verlegt und dabei mit Ultraschall beaufschlagt, sodass er sich aufgrund der erzeugten Schwingungen in die Oberfläche eingräbt. Kontaktpads des Kontaktlayouts werden dabei durch mäanderförmiges oder zick-zack-artiges Verlegen des Drahts hergestellt, und auch die elektrisch leitende Verbindungen 16 zwischen den Kontaktpads werden dabei durch den Draht gebildet aus dem auch die Pads erstellt wurden.

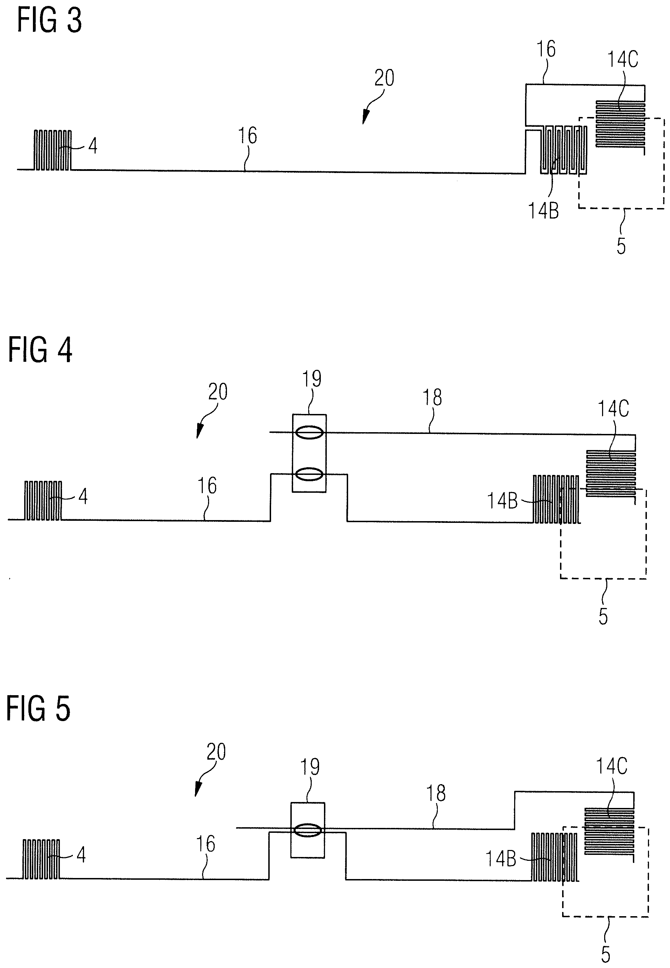

Ein exemplarischer Aspekt der vorliegenden Offenbarung, der dem Verständnis der Erfindung dient, wird nachfolgend anhand der Figur 3 erläutert, welche schematisch in Aufsicht einen Teil eines auf der Inlayschicht 11 angelegten Kontaktlayouts 20 zeigt. Dieser Teil des Kontaktlayouts 20 umfasst einerseits zwei Kontaktpads 4 und 14B, die mittels der Verbindungsleitung 16 elektrisch verbunden sind und durch einen durchgehenden Draht gebildet werden, wobei der Draht im Bereich der Kontaktpads 4 und 14B mäanderförmig verläuft. Darüber hinaus ist ein drittes Kontaktpad 14C vorhanden, welches zum Kontaktieren der in Figur 1 gezeigten Kontaktfläche 17C der zweiten elektronischen Komponente 15 dient. Derselbe Draht, mit dem die Kontaktpads 4, 14B und die elektrisch leitende Verbindung 16 gebildet wird, führt aus dem Kontaktpad 14B heraus zu dem Kontaktpad 14C und ist dort ebenfalls mäanderförmig verlegt, um das Kontaktpad 14C zu bilden. Somit werden alle Kontaktpads 4, 14B, 14C und die Verbindungsleitungen 16 durch einen durchgehenden Draht gebildet. Das Besondere bei diesem Aspekt der vorliegenden Offenbarung besteht einerseits darin, dass der Draht einerseits im Bereich des Kontaktpads 14B als Doppelmäander verlegt ist und andererseits vorzugsweise auf derjenigen Seite des Kontaktpads 14B herausführt, wo die Verbindungsleitung 16 in das Kontaktpad 14B hineinführt. Die Kontaktpads 14B und 14C liegen im Schulterbereich 5a der in Figur 2B dargestellten zweistufigen Aussparung 5. Es kann beim Ausfräsen der zweistufigen Vertiefung vorkommen, insbesondere im Falle von Toleranzabweichungen bei der Kartenherstellung, dass der tieferliegende Teil der zweistufigen Aussparung 5, der in Figur 3 durch eine in Strichlinien dargestellte Umrahmung angedeutet ist, einen Teil des Kontaktpads 14B wegfräst. Zwar wird der Draht im Bereich des Kontaktpads 14B dabei durchtrennt und leitet zunächst nicht mehr zum anderen Kontaktpad 14C weiter. Wenn aber anschließend beim Einsetzen der elektronischen Komponente 15 dieses Kontaktpad 14B mit einer zugeordneten Kontaktfläche 17B der elektronischen Komponente 15 verbunden wird, beispielsweise mittels eines elektrisch leitfähigen Klebers oder Lots oder über eine elektrisch leitende ACF-Folie, dann werden die ineinander verschachtelten Mäanderschleifen des als Doppelmäander verlegten Drahts kurzgeschlossen, sodass auch wieder eine elektrisch leitende Verbindung zu dem Kontaktpad 14C hergestellt ist.

Wie in Figur 3 gezeigt, wird der Doppelmäander vorzugsweise so verlegt, dass ein erster Teil des durchgehenden Drahts in einer ersten Richtung aneinandergereihte erste Mäanderschleifen bildet und ein daran anschließender zweiter Teil des durchgehenden Drahts in einer entgegengesetzten Durchlaufrichtung aneinandergereihte zweite Mäanderschleifen bildet, sodass die ersten und zweiten Mäanderschleifen ineinander verschachtelt sind. Die Verbindungen 16 zu den Kontaktpads 4 und 14C treten in das Kontaktpad 14B vorzugsweise an Stellen ein, die von der Aussparung 5 möglichst weit entfernt sind, vorzugsweise an der von der Aussparung 5 wegweisenden Seite des Kontaktpads 14B.

Ein exemplarischer Aspekt der vorliegenden Offenbarung, der dem Verständnis der Erfindung dient, wird nachfolgend anhand der Figuren 4 und 5 erläutert, welche jeweils wieder in schematischer Aufsicht ein Teil eines auf der Inlayschicht 11 angelegten Kontaktlayouts 20 zeigen. Auch in diesem Falle umfasst das Kontaktlayout ein erstes Kontaktpad 4 zum Anschließen einer ersten elektronischen Komponente, beispielsweise des Chipmoduls 2, und mindestens zwei Kontaktpads 14B, 14C zum Anschließen der zweiten elektronischen Komponente 15 sowie eine elektrisch leitende Verbindung 16 zwischen dem ersten Kontaktpad 4 und dem ersten der zweiten Kontaktpads 14B und eine weitere elektrisch leitende Verbindung 18, 19 zwischen dem Kontaktpad 14B und dem weiteren Kontaktpad 14C, wobei die Kontaktpads jeweils durch einen mäanderförmig verlaufenden Draht gebildet sind. In diesem Fall wird das zweite Kontaktpad 14C jedoch durch einen eigenen durchgehenden Draht gebildet, der eine aus dem Kontaktpad 14C herausführende Anschlussleitung 18 bildet, welche jedoch nicht unmittelbar zum ersten Kontaktpad 14B führt. Stattdessen ist ein elektrisch leitendes Verbindungselement 19 so vorgesehen, dass es einen Bereich der Verbindungsleitung 16 zwischen den Kontaktpads 4 und 14B und einen Bereich der Anschlussleitung 18 überlagert und miteinander verbindet.

Das Verbindungselement 19 kann ein metallisches Element oder ein metallisiertes Element sein, beispielsweise ein Stück Kupfer oder eine dünne Kupferfolie oder eine metallisierte Kunststofffolie, beispielsweise eine PVC-Folie, besonders bevorzugt eine mit Kupfer beschichtete Kunststofffolie. Es ist möglich, erst das Verbindungselement 19 auf der Inlayschicht 11 aufzubringen und anschließend die jeweils durchgehenden Drähte im Bereich der Verbindungsleitung 16 und Anschlussleitung 18 darüber zu verlegen, oder erste die Drähte zu verlegen und anschließend das Verbindungselement 19 über der Verbindungsleitung 16 und Anschlussleitung 18 zu platzieren. Die elektrischen Verbindungen zwischen dem elektrisch leitenden Verbindungselement 19 und der Verbindungsleitung 16 und Anschlussleitung 18 sind in Fig. 4 durch zwei Ellipsen angedeutet und erfolgen vorzugsweise im Wege des Thermokompressionsschweißens. Das Thermokompressionsschweißen erfolgt vorzugsweise mittels Unterstützung durch Ultraschall, wobei sowohl eine Kunststoffummantelung der Drähte als auch eine etwaige Oxidschicht des metallischen elektrisch leitenden Verbindungselements 19 weggerieben wird, bevor die Elemente letztlich miteinander verschweißen. Die Ausführungsbeispiele gemäß Figuren 4 und 5 unterscheiden sich nur insoweit, als die Verbindungleitung 16 und die Anschlussleitung 18 bei dem Ausführungsbeispiel gemäß Figur 5 so nahe beieinanderliegen, dass eine einzige Schweißverbindung (in Fig. 5 durch nur eine Ellipse angedeutet) genügt, um beide Leitungen 16, 18 mit dem Verbindungselement 19 elektrisch leitend zu verbinden. Demgegenüber wird bei dem Ausführungsbeispiel gemäß Figur 4 für die Verbindung des Verbindungselements 19 mit der Verbindungsleitung 16 einerseits und mit der Anschlussleitung 18 andererseits jeweils eine separate Schweißverbindung erzeugt. Im Zusammenhang mit dem vorliegenden zweiten Aspekt ist es bevorzugt, die elektrisch leitenden Verbindungselemente 19 für eine Mehrzahl von Chipkarten auf einer entsprechend großformatige Kunststofffolie bereitzustellen, die die Inlayschicht 11 bildet, wobei die elektrisch leitenden Verbindungselemente als bereichsweise metallische Beschichtung an den entsprechenden Stellen vorgesehen sind, wo eine elektrisch leitende Verbindung zwischen benachbarten Leitungen 16, 18 hergestellt werden soll. Alternativ kann eine entsprechende Anzahl von Verbindungselementen in vorbereitete Ausschnitte des vollformatigen Bogens eingelegt werden, worauf anschließend die Drähte verlegt werden.

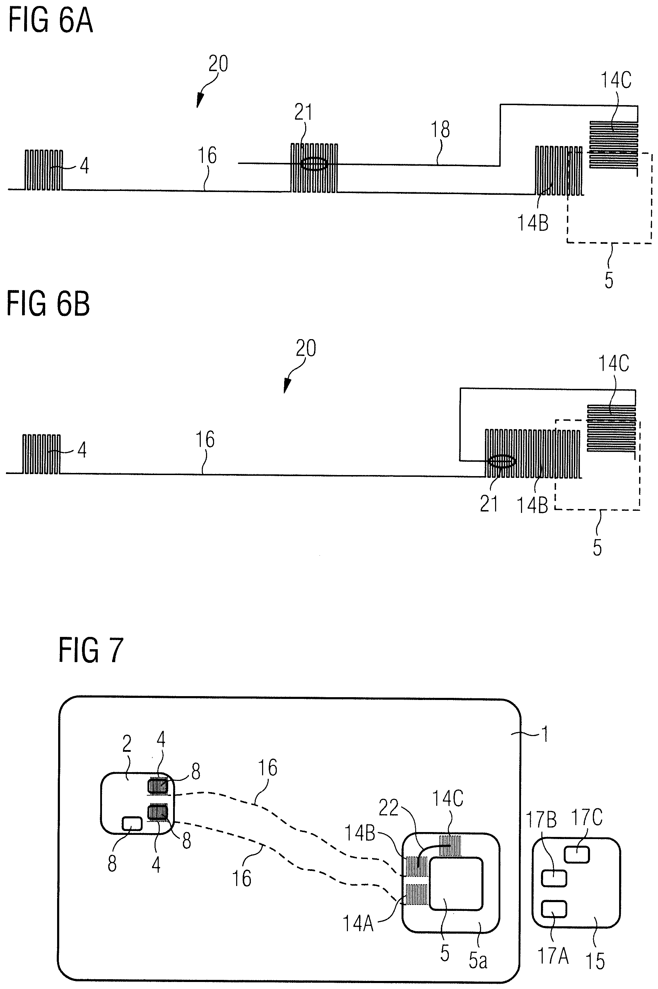

Ein exemplarischer Aspekt der vorliegenden Offenbarung, der ebenfalls dem Verständnis der Erfindung dient, wird nachfolgend anhand der Figuren 6A und 6B erläutert, welche wiederum schematisch in Aufsicht jeweils einen Teil eines auf der Inlayschicht 11 angelegten Kontaktlayouts 20 zeigen. Die Lösung gemäß des dritten Aspekts ist ähnlich zu der des zweiten Aspekts. Anstatt jedoch ein zusätzliches elektrisch leitendes Verbindungselement als separates Bauelement vorzusehen, wird ein viertes Drahtpad 21 zusätzlich zu den als Drahtpads ausgebildeten Anschlusspads 4, 14B und 14C vorgesehen, nämlich als Bestandteil der Verbindungsleitung 16. Dementsprechend sind die Verbindungsleitungen 16 und die zugehörigen Drahtpads 4, 21 und 14B mittels eines durchgehenden Drahts gebildet. Die aus dem Anschlusspad 14C herausführende Anschlussleitung 18 wird oberhalb oder unterhalb des vierten Drahtpads 21 verlegt, je nachdem welcher der beiden Drähte zuerst verlegt wird. Anschließend erfolgt die elektrisch leitende Verbindung zwischen der Anschlussleitung 18 und dem vierten Drahtpad 21, vorzugsweise wieder im Wege des Thermokompressionsschweißens. Dies ist in Fig. 6A mit einer Ellipse angedeutet. Der Vorteil dieser Lösung gegenüber der Lösung gemäß dem vorbeschriebenen zweiten Aspekt besteht darin, dass kein zusätzliches Material im Sinne eines weiteren separaten Elements benötigt wird, um die Verbindung zwischen den beiden Drähten herzustellen, sodass die Dicke der Inlayschicht 11 mit dem darauf befindlichen Kontaktlayout 20 im Vergleich zu der eingangs erläuterten Doppelmäanderlösung nicht erhöht ist.

Fig. 6B zeigt eine Alternative zu dem Ausführungsbeispiel aus Fig. 6A dergestalt, dass das zusätzliche vierte Drahtpad 21 zum Kontaktpad 14B hin verschoben ist und vorzugsweise eine Vergrößerung des Kontaktpads 14B bildet. Diese Vergrößerung beträgt bevorzugt mindestens 50% und kann wie im Ausführungsbeispiel gemäß Fig. 6B dargestellt etwa 100% betragen.

Alternativ, in den Figuren aber nicht explizit dargestellt, kann das zusätzliche vierte Drahtpad 21 zum Kontaktpad 4 hin verschoben sein und bevorzugt eine Vergrößerung des Kontaktpads 4 bilden, sodass das Kontaktpad 4 bevorzugt mindestens 50% und insbesondere beispielsweise 100% größer ist, als ein oder alle anderen der Kontaktpads 4 zur Kontaktierung der ersten elektronischen Komponente, beziehungsweise zur Kontaktierung des Chipmoduls 2.

Das Verlagern des vierten Drahtpads 21 zum Drahtpad 14B oder zum Drahtpad 4 bietet den Vorteil, dass dessen Sichtbarkeit auf der Oberfläche der fertigen Chipkarte verringert wird.

Ebenfalls nicht dargestellt ist eine weitere Abwandlung dieses dritten Aspekts der vorliegenden Offenbarung, wonach das vierte Drahtpad 21 entfällt und die Anschlussleitung 18 des Kontaktpads 14C unmittelbar über oder unter dem Kontaktpad 14B verlegt wird, oder alternativ über oder unter dem Kontaktpad 4. Im erstgenannten Fall werden die beiden Drähte im Bereich des Kontaktpads 14B in etwa an derselben Stelle elektrisch leitend miteinander verbunden, an der später auch eine elektrische Verbindung zwischen dem Kontaktpad 14B und dem Kontaktanschluss 17B des zugehörigen zweiten elektronischen Bauelements 15 erfolgt.

Ein erfinderischer Aspekt der vorliegenden Offenbarung bezieht sich auf Ausführungsformen der Erfindung und wird nachfolgend anhand der Fig. 7 erläutert, welche schematisch den Datenträger 1 in Aufsicht zeigt mit einer darin eingesetzten ersten elektronischen Komponente, hier dem Chipmodul 2, und einer zweiten elektronischen Komponente 15, die in die zweistufige Aussparung 5 des Kartenkörpers 1 noch einzusetzen ist. Die auf den elektronischen Komponenten 2 und 15 dargestellten Kästchen 4 bzw. 17A bis 17C repräsentieren Anschlussflächen der betreffenden elektrischen Komponenten, einschließlich der in Bezug auf Fig. 1 bereits erwähnten Anschlussfläche 17C, welche gemeinsam mit einer weiteren Anschlussfläche 17B der selben elektronischen Komponente 15 über eine Verbindungsleitung 16 mit einer zugeordneten Anschlussfläche 4 der anderen elektronischen Komponente 2 elektrisch leitend verbunden werden soll. Verbindungsleitungen 16 verlaufen, wie zuvor beschrieben, im Inneren des Kartenkörpers 1 auf einer innenliegenden Oberfläche einer Inlayschicht. Die zweistufige Aussparung 5 einschließlich des Schulterbereichs 5a ist aus dem Kartenkörper 1 ausgefräst, und im Schulterbereich 5a sind lokal Vertiefungen gefräst für den Fall der in Figur 2 A beschriebenen Verbindungstechnik mittels Lot (TeConnect) bzw.leitfähigem Elastomer (Flex-Bump), um die zugehörigen Kontaktpads 14A, 14B freizulegen. Falls die Verbindungstechnik mittels ACF-Folie benutzt wird, ist die Ausgestaltung der Vertiefungen analog Figur 2B. Zusätzlich ist ein weiteres Kontaktpad 14C freigelegt. Alle Kontaktpads sind Drahtpads, wie zuvor beschrieben, und die Verbindungsleitungen 16 sind mit dem jeweiligen Kontaktpad 14A und 14B als durchgängiger Draht ausgebildet. Die Kontaktierung zwischen den Kontaktpads 14A, 14B, 14C einerseits und den zugehörigen Kontaktflächen 17A, 17B, 17C der zweiten elektronischen Komponente 15 andererseits kann beispielsweise in der Flex-Bump-Technologie erfolgen mittels einer Lotpaste (z.B. TeConnect) oder mittels ACF-Folie, wie ebenfalls zuvor erläutert.

Bei diesem erfinderischen Aspekt der vorliegenden Offenbarung werden die Kontaktpads 14B und 14C in der Weise miteinander elektrisch verbunden, dass die Lotpaste, oder im Falle der Flex-Bump-Technologie die elektrisch leitfähige Kunststoffmasse, nicht nur im Bereich der Kontaktpads 14B und 14C aufgebracht wird, sondern dass damit auch eine elektrisch leitende Verbindung 22 direkt zwischen den beiden Kontaktpads 14B und 14C hergestellt wird. Zu diesem Zweck wird der Schulterbereich 5a der zweitstufigen Vertiefung 5 nicht nur im Bereich der Kontaktpads 14B und 14C weggefräst, sondern es wird auch ein Verbindungskanal dazwischen gefräst, in welchem dann die Lotpaste oder der elektrisch leitfähige Kunststoff entlang einer durchgehenden Linie verlegt wird, um so die beiden Kontaktpads 14B und 14C elektrisch leitend zu verbinden. Die Lotpaste oder der elektrisch leitende Kunststoff ist in diesem Falle im Bezug auf die elektrische Leitfähigkeit isotrop.

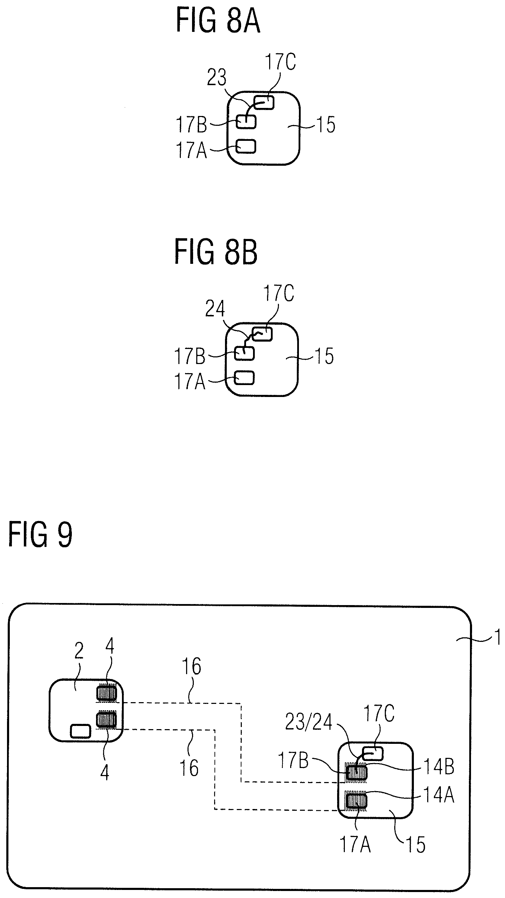

Ein weiterer erfinderischer Aspekt der vorliegenden Offenbarung bezieht sich ebenfalls auf Ausführungsformen der Erfindung und wird nachfolgend anhand der Figuren 8A, 8B und 9 erläutert. Darin zeigen die Figuren 8A und 8B jeweils in Aufsicht von oben schematisch zwei Ausführungsbeispiele für die zweite elektronische Komponente 15. Diese kann in der selben Weise in den Kartenkörper 1 eingesetzt werden, wie im Bezug auf Fig. 7 erläutert und in Fig. 9 gezeigt. Der Unterschied zu dem zuvor beschriebenen vierten Aspekt besteht darin, dass auf das zusätzliche Kontaktpad 14C des Kontaktlayouts oder der Inlayschicht verzichtet werden kann.

Diese Lösung bietet sich für diejenigen Karten an, bei denen die Verbindung zwischen den Kontaktpads des Kontaktlayouts und den Kontaktflächen der elektronischen Komponenten mittels ACF-Anschlusstechnik erfolgt. Denn eine laterale elektrisch leitende Verbindung kann mit ACF-Folien nicht hergestellt werden, da diese nur in Z-Richtung, also lotrecht zu den Kontaktpads und Kontaktflächen, leitfähig ist. Bei dem Material zur Herstellung der leitfähigen Verbindung zwischen den beiden Kontaktflächen 17B und 17C der elektronischen Komponente 15 in Fig. 8A handelt es sich um einen einfachen, vorzugsweise unisolierten Draht 23. Bei der Variante gemäß Fig. 8B ist anstelle des Drahts 23 eine isotrope Leitpaste 24 vorgesehen. Mit Leitpaste sind alle Materialien gemeint, welche in irgendeiner Art aufgebracht werden können, um eine elektrische Verbindung zwischen zwei Kontaktpads zu ermöglichen. Das kann z.B. ein Lot sein oder eine mit metallischen Partikeln jeglicher Form gefüllte Paste, ebenso Carbon oder andere elektrisch leitfähige Materialien. Die Leitpaste härtet aus bzw. trocknet, bevor die elektronische Komponente 15 in den Kartenkörper 1 eingesetzt wird. Auf dem Karteninlay braucht dann nur eine eins-zu-eins Drahtverbindung zwischen den jeweiligen Kontaktpads 4 und 14A, 14B der miteinander zu verbindenden elektronischen Komponenten 2 und 15 hergestellt zu werden, welche vorzugsweise wieder mittels eines durchgehenden Drahtes gebildet werden, die im Bereich der Kontaktpads mäanderförmig verlaufen.

Bei allen vorbeschriebenen Aspekten der vorliegenden Offenbarung ist es sinnvoll, durch Verwendung von Mehrnutzenbögen eine Vielzahl von Kontaktlayouts 20 und, in der Folge, Kartenkörpern 1 pro Mehrnutzenbogen herzustellen. Dazu wird eine entsprechende Vielzahl von Kontaktlayouts auf demjenigen Mehrnutzenbogen aufgebracht, der die Inlayschicht 11 des Kartenkörpers 1 bildet, wobei das Kontaktlayout 20 auf der innenliegenden Oberfläche der Inlayschicht 11 liegt. Die kartenförmigen Datenträger, insbesondere Chipkarten, werden aus dem Mehrnutzenbogen erst ganz zum Schluss herausgetrennt, nachdem alle Schichten miteinander laminiert worden sind.

## Patentansprüche

1. Kontaktlayout (20) für einen mehrschichtigen kartenförmigen Datenträger, umfassend mindestens ein erstes Kontaktpad (4) zum Anschließen einer ersten elektronischen Komponente (2), mindestens zwei zweite Kontaktpads (14B, 14C) zum Anschließen einer zweiten elektronischen Komponente (15) mit mindestens zwei Kontaktflächen, und elektrisch leitenden Verbindungen einerseits zwischen dem ersten Kontaktpad und einem ersten der zweiten Kontaktpads und andererseits zwischen dem ersten der zweiten Kontaktpads und einem zweiten der zweiten Kontaktpads, wobei die genannten Kontaktpads jeweils durch einen mäanderförmig verlaufenden Draht gebildet sind, **dadurch gekennzeichnet, dass** die elektrisch leitende Verbindung zwischen dem ersten der zweiten Kontaktpads und dem zweiten der zweiten Kontaktpads hergestellt ist durch eine diese beiden Kontaktpads direkt verbindende Linie aus einem elektrisch leitenden Lotmaterial, sodass, wenn die zweite elektronische Komponente an den mindestens zwei zweiten Kontaktpads angeschlossen ist, zwei Kontaktflächen der zweiten elektronischen Komponente (15) elektrisch leitend verbunden sind.

2. Halbzeug zur Herstellung eines mehrschichtigen kartenförmigen Datenträgers, umfassend eine erste elektronische Komponente (2) und eine zweite elektronische Komponente (15) sowie eine Kunststoffschicht mit einer Oberfläche, die dazu vorgesehen ist im Inneren des kartenförmigen Datenträgers zu liegen und die mindestens ein Kontaktlayout (20) umfasst, wobei das Kontaktlayout (20) mindestens ein erstes Kontaktpad (4) zum Anschließen einer ersten elektronischen Komponente (2), mindestens ein zweites Kontaktpad (14B, 14C) zum Anschließen einer zweiten elektronischen Komponente (15) mit mindestens zwei Kontaktflächen, und eine elektrisch leitende Verbindung zwischen dem ersten Kontaktpad und dem zweiten Kontaktpad umfasst, wobei die genannten Kontaktpads jeweils durch einen mäanderförmig verlaufenden Draht gebildet sind, **dadurch gekennzeichnet, dass** eine elektrisch leitende Verbindung zwischen den beiden Kontaktflächen der zweiten elektronischen Komponente (15) mittels eines elektrisch leitenden Materials hergestellt ist, welches auf die beiden Kontaktflächen aufgebracht ist und diese direkt miteinander verbindet.

3. Halbzeug nach Anspruch 2, wobei das die beiden Kontaktflächen der zweiten elektronischen Komponente (15) direkt verbindende, elektrisch leitende Material ein unisolierter Draht ist.

4. Halbzeug nach Anspruch 2, wobei das die beiden Kontaktflächen der zweiten elektronischen Komponente (15) direkt verbindende, elektrisch leitende Material eine Linie aus isotroper Leitpaste ist.

5. Halbzeug nach einem der Ansprüche 2 bis 4, umfassend mindestens ein weiteres zweites Kontaktpad zum Anschließen der zweiten elektronischen Komponente (15), wobei auf den mindestens zwei zweiten Kontaktpads eine anisotrop leitende Folie zur Herstellung einer elektrisch leitenden Verbindung mit zwei entsprechenden Kontaktflächen der zweiten elektronischen Komponente (15) lotrecht zu den zweiten Kontaktpads vorgesehen ist.

6. Halbzeug nach einem der Ansprüche 2 bis 5, wobei das Halbzeug ein Mehrnutzenbogen ist, der mehrere der Kontaktlayouts (20) aufweist

7. Mehrschichtiger kartenförmiger Datenträger, hergestellt aus einem Halbzeug nach einem der Ansprüche 2 bis 6.

8. Datenträger nach Anspruch 7, umfassend mindestens eine das Kontaktlayout (20) abdeckende Deckschicht mit mindestens einer Aussparung zur Aufnahme der ersten oder der zweiten oder beider elektronischer Komponenten.

9. Datenträger nach Anspruch 8, wobei die mindestens einen Aussparung eine zweistufige Vertiefung mit einem Schulterbereich ist, der sich über zumindest eines der Kontaktpads des Kontaktlayouts (20) erstreckt.

10. Datenträger nach einem der Ansprüche 7 bis 9, umfassend einen Fingerabdrucksensor als einen der beiden elektronischen Komponenten und dazu einen damit elektrisch leitend verbundenen Microchip.

11. Verfahren zum Herstellen eines Kontaktlayouts (20) für einen mehrschichtigen kartenförmigen Datenträger, umfassend die folgenden Schritte:
- Bereitstellen eines Kunststoffsubstrats,
- Verlegen eines ersten durchgehenden Drahts auf dem Kunststoffsubstrat zum Erzeugen von mindestens einem ersten Kontaktpad zum Anschließen einer ersten elektronischen Komponente (2), einem ersten von mindestens zwei zweiten Kontaktpads (14B, 14C) zum Anschließen einer zweiten elektronischen Komponente (15) mit mindestens zwei Kontaktflächen und zum Erzeugen einer Verbindungsleitung zwischen diesen beiden Kontaktpads, wobei der erste durchgehende Draht in den genannten Kontaktpads jeweils mäanderförmig verlegt wird,
- Verlegen eines zweiten durchgehenden Drahts auf dem Kunststoffsubstrat zum Erzeugen eines zweiten der zweiten Kontaktpads, wobei der zweite durchgehende Draht in dem zweiten der zweiten Kontaktpads mäanderförmig verlegt wird,
- Erzeugen einer elektrisch leitenden Verbindung zwischen dem ersten der zweiten Kontaktpads und dem zweiten der zweiten Kontaktpads, indem eine diese beiden Kontaktpads direkt verbindende Linie aus einem elektrisch leitenden Lotmaterial aufgebracht wird, sodass, wenn die zweite elektronische Komponente an den mindestens zwei zweiten Kontaktpads angeschlossen ist, zwei Kontaktflächen der zweiten elektronischen Komponente (15) elektrisch leitend verbunden sind.

12. Verfahren nach Anspruch 11, wobei das Lotmaterial eine Lotpaste ist.

13. Verfahren zum Herstellen eines Halbzeugs für einen mehrschichtigen kartenförmigen Datenträger, umfassend die Schritte:
- Bereitstellen eines Kunststoffsubstrats,
- Verlegen eines durchgehenden Drahts auf dem Kunststoffsubstrat zum Erzeugen von mindestens einem ersten Kontaktpad zum Anschließen einer ersten elektronischen Komponente (2), einem zweiten Kontaktpad (14B, 14C) zum Anschließen einer zweiten elektronischen Komponente (15) mit mindestens zwei Kontflächen, und zum Erzeugen einer Verbindungsleitung zwischen diesen beiden Kontaktpads, wobei der durchgehende Draht in den genannten Kontaktpads vorzugsweise jeweils mäanderförmig verlegt wird,
und
- Erzeugen einer elektrisch leitenden Verbindung zwischen den beiden Kontaktflächen der zweiten elektronischen Komponente (15) durch Aufbringen eines elektrisch leitenden Materials auf den beiden Kontaktflächen der zweiten elektronischen Komponente (15), welches diese direkt miteinander verbindet.

14. Verfahren nach Anspruch 13, wobei das die beiden Kontaktflächen der zweiten elektronischen Komponente (15) direkt verbindende, elektrisch leitende Material ein unisolierter Draht oder eine Linie aus isotroper Leitpaste ist.

15. Verfahren nach einem der Ansprüche 13 bis 14, wobei mindestens ein weiteres zweites Kontaktpad zum Anschließen der zweiten elektronischen Komponente (15) auf dem Kunststoffsubstrat vorgesehen ist, umfassend den weiteren Schritt des Aufbringens einer anisotrop leitenden Folie auf den mindestens zwei zweiten Kontaktpads zur Herstellung einer lotrecht zu den zweiten Kontaktpads ausgebildeten elektrisch leitenden Verbindung mit zwei entsprechenden Kontaktflächen der zweiten elektronischen Komponente (15).

16. Verfahren nach einem der Ansprüche 11 bis 15, wobei die Kunststofffolie einen Mehrnutzenbogen bildet, auf dem mehrere der ersten Kontaktpads und der zweiten Kontaktpads für eine Vielzahl von Kontaktlayouts (20) erzeugt werden.

17. Verfahren zum Herstellen eines mehrschichtigen kartenförmigen Datenträgers, oder eines Halbzeugs für einen solchen Datenträger, wobei auf einer innenliegenden Oberfläche einer Schicht des Datenträgers ein Kontaktlayout (20) gemäß einem Verfahren nach einem der Ansprüche 11 und 13 hergestellt wird.

## Claims

1. Contact layout (20) for a multilayer card-shaped data carrier, comprising at least one first contact pad (4) for connecting a first electronic component (2), at least two second contact pads (14B, 14C) for connecting a second electronic component (15) with at least two contact surfaces, and electrically conductive connections on the one hand between the first contact pad and a first of the second contact pads and on the other hand between the first of the second contact pads and a second of the second contact pads, wherein said contact pads are each formed by a meandering wire, **characterized in that** the electrically conductive connection between the first of the second contact pads and the second of the second contact pads is established by a line of an electrically conductive solder material directly connecting these two contact pads, so that, when the second electronic component is connected to the at least two second contact pads, two contact surfaces of the second electronic component (15) are electrically conductively connected.

2. Semi-finished product for producing a multilayer card-shaped data carrier, comprising a first electronic component (2) and a second electronic component (15) as well as a plastic layer with a surface which is intended to lie inside the card-shaped data carrier and which comprises at least one contact layout (20), wherein the contact layout (20) comprises at least one first contact pad (4) for connecting a first electronic component (2), at least one second contact pad (14B, 14C) for connecting a second electronic component (15) with at least two contact surfaces, and an electrically conductive connection between the first contact pad and the second contact pad, wherein said contact pads are each formed by a meandering wire, **characterized in that** an electrically conductive connection between the two contact surfaces of the second electronic component (15) is established by means of an electrically conductive material which is applied to the two contact surfaces and directly connects these to one another.

3. Semi-finished product according to claim 2, wherein the electrically conductive material directly connecting the two contact surfaces of the second electronic component (15) is an uninsulated wire.

4. Semi-finished product according to claim 2, wherein the electrically conductive material directly connecting the two contact surfaces of the second electronic component (15) is a line of isotropic conductive paste.

5. Semi-finished product according to one of claims 2 to 4, comprising at least one further second contact pad for connecting the second electronic component (15), wherein an anisotropically conductive film for establishing an electrically conductive connection with two corresponding contact surfaces of the second electronic component (15) perpendicular to the second contact pads is provided on the at least two second contact pads.

6. Semi-finished product according to one of claims 2 to 5, wherein the semi-finished product is a multi-use sheet which has a plurality of the contact layouts (20).

7. Multilayer card-shaped data carrier, produced from a semi-finished product according to one of claims 2 to 6.

8. Data carrier according to claim 7, comprising at least one cover layer covering the contact layout (20) with at least one recess for receiving the first or the second or both electronic components.

9. Data carrier according to claim 8, wherein the at least one recess is a two-stage depression with a shoulder region which extends over at least one of the contact pads of the contact layout (20).

10. Data carrier according to one of claims 7 to 9, comprising a fingerprint sensor as one of the two electronic components and a microchip electrically conductively connected thereto.

11. Method for producing a contact layout (20) for a multilayer card-shaped data carrier, comprising the following steps:
- providing a plastic substrate,
- laying a first continuous wire on the plastic substrate for generating at least one first contact pad for connecting a first electronic component (2), a first of at least two second contact pads (14B, 14C) for connecting a second electronic component (15) with at least two contact surfaces and for generating a connecting line between these two contact pads, wherein the first continuous wire is respectively laid in a meandering manner in said contact pads,
- - laying a second continuous wire on the plastic substrate for generating a second of the second contact pads, wherein the second continuous wire is laid in a meandering manner in the second of the second contact pads,
- generating an electrically conductive connection between the first of the second contact pads and the second of the second contact pads by applying a line of an electrically conductive solder material directly connecting these two contact pads, so that, when the second electronic component is connected to the at least two second contact pads, two contact surfaces of the second electronic component (15) are electrically conductively connected.

12. Method according to claim 11, wherein the solder material is a solder paste.

13. Method for producing a semi-finished product for a multilayer card-shaped data carrier, comprising the steps:
- providing a plastic substrate,
- laying a continuous wire on the plastic substrate for generating at least one first contact pad for connecting a first electronic component (2), a second contact pad (14B, 14C) for connecting a second electronic component (15) with at least two contact surfaces, and for generating a connecting line between these two contact pads, wherein the continuous wire is preferably respectively laid in a meandering manner in said contact pads,
and
- generating an electrically conductive connection between the two contact surfaces of the second electronic component (15) by applying an electrically conductive material to the two contact surfaces of the second electronic component (15) which directly connects these to one another.

14. Method according to claim 13, wherein the electrically conductive material directly connecting the two contact surfaces of the second electronic component (15) is an uninsulated wire or a line of isotropic conductive paste.

15. Method according to one of claims 13 to 14, wherein at least one further second contact pad for connecting the second electronic component (15) is provided on the plastic substrate, comprising the further step of applying an anisotropically conductive film to the at least two second contact pads for establishing an electrically conductive connection formed perpendicular to the second contact pads with two corresponding contact surfaces of the second electronic component (15).

16. Method according to one of claims 11 to 15, wherein the plastic film forms a multi-use sheet on which a plurality of the first contact pads and the second contact pads are generated for a plurality of contact layouts (20).

17. Method for producing a multilayer card-shaped data carrier, or a semi-finished product for such a data carrier, wherein a contact layout (20) is produced on an inner surface of a layer of the data carrier according to a method according to one of claims 11 and 13.

## Revendications

1. Agencement de contact (20) pour un support de données en forme de carte multicouche, comprenant au moins une première plage de contact (4) pour la connexion d'un premier composant électronique (2), au moins deux deuxièmes plages de contact (14B, 14C) pour la connexion d'un deuxième composant électronique (15) avec au moins deux surfaces de contact, et des connexions électriquement conductrices d'une part entre la première plage de contact et une première des deuxièmes plages de contact et d'autre part entre la première des deuxièmes plages de contact et une deuxième des deuxièmes plages de contact, dans lequel lesdites plages de contact sont formées chacune par un fil en méandres, **caractérisé en ce que** la connexion électriquement conductrice entre la première des deuxièmes plages de contact et la deuxième des deuxièmes plages de contact est établie par une ligne d'un matériau de brasage électriquement conducteur connectant directement ces deux plages de contact, de sorte que, lorsque le deuxième composant électronique est connecté aux au moins deux deuxièmes plages de contact, deux surfaces de contact du deuxième composant électronique (15) sont connectées de manière électriquement conductrice.

2. Produit semi-fini pour la fabrication d'un support de données en forme de carte multicouche, comprenant un premier composant électronique (2) et un deuxième composant électronique (15) ainsi qu'une couche de matière plastique avec une surface qui est prévue pour se trouver à l'intérieur du support de données en forme de carte et qui comprend au moins un agencement de contact (20), dans lequel l'agencement de contact (20) comprend au moins une première plage de contact (4) pour la connexion d'un premier composant électronique (2), au moins une deuxième plage de contact (14B, 14C) pour la connexion d'un deuxième composant électronique (15) avec au moins deux surfaces de contact, et une connexion électriquement conductrice entre la première plage de contact et la deuxième plage de contact, dans lequel lesdites plages de contact sont formées chacune par un fil en méandres, **caractérisé en** ce **qu**'une connexion électriquement conductrice entre les deux surfaces de contact du deuxième composant électronique (15) est établie au moyen d'un matériau électriquement conducteur qui est appliqué sur les deux surfaces de contact et les connecte directement l'une à l'autre.

3. Produit semi-fini selon la revendication 2, dans lequel le matériau électriquement conducteur connectant directement les deux surfaces de contact du deuxième composant électronique (15) est un fil non isolé.

4. Produit semi-fini selon la revendication 2, dans lequel le matériau électriquement conducteur connectant directement les deux surfaces de contact du deuxième composant électronique (15) est une ligne de pâte conductrice isotrope.

5. Produit semi-fini selon l'une des revendications 2 à 4, comprenant au moins une deuxième plage de contact supplémentaire pour la connexion du deuxième composant électronique (15), dans lequel un film anisotropiquement conducteur pour établir une connexion électriquement conductrice avec deux surfaces de contact correspondantes du deuxième composant électronique (15) perpendiculairement aux deuxièmes plages de contact est prévu sur les au moins deux deuxièmes plages de contact.

6. Produit semi-fini selon l'une des revendications 2 à 5, dans lequel le produit semi-fini est une feuille à usages multiples qui présente une pluralité des agencements de contact (20).

7. Support de données en forme de carte multicouche, fabriqué à partir d'un produit semi-fini selon l'une des revendications 2 à 6.

8. Support de données selon la revendication 7, comprenant au moins une couche de couverture recouvrant l'agencement de contact (20) avec au moins un évidement pour recevoir le premier ou le deuxième ou les deux composants électroniques.

9. Support de données selon la revendication 8, dans lequel l'au moins un évidement est un renfoncement à deux étages avec une région d'épaulement qui s'étend sur au moins l'une des plages de contact de l'agencement de contact (20).

10. Support de données selon l'une des revendications 7 à 9, comprenant un capteur d'empreinte digitale comme l'un des deux composants électroniques et une micropuce connectée de manière électriquement conductrice à celui-ci.

11. Procédé de fabrication d'un agencement de contact (20) pour un support de données en forme de carte multicouche, comprenant les étapes suivantes :
- fourniture d'un substrat en matière plastique,
- pose d'un premier fil continu sur le substrat en matière plastique pour générer au moins une première plage de contact pour la connexion d'un premier composant électronique (2), une première d'au moins deux deuxièmes plages de contact (14B, 14C) pour la connexion d'un deuxième composant électronique (15) avec au moins deux surfaces de contact et pour générer une ligne de connexion entre ces deux plages de contact, dans lequel le premier fil continu est respectivement posé en méandres dans lesdites plages de contact,
- - pose d'un deuxième fil continu sur le substrat en matière plastique pour générer une deuxième des deuxièmes plages de contact, dans lequel le deuxième fil continu est posé en méandres dans la deuxième des deuxièmes plages de contact,
- génération d'une connexion électriquement conductrice entre la première des deuxièmes plages de contact et la deuxième des deuxièmes plages de contact en appliquant une ligne d'un matériau de brasage électriquement conducteur connectant directement ces deux plages de contact, de sorte que, lorsque le deuxième composant électronique est connecté aux au moins deux deuxièmes plages de contact, deux surfaces de contact du deuxième composant électronique (15) sont connectées de manière électriquement conductrice.

12. Procédé selon la revendication 11, dans lequel le matériau de brasage est une pâte de brasage.

13. Procédé de fabrication d'un produit semi-fini pour un support de données en forme de carte multicouche, comprenant les étapes suivantes :
- fourniture d'un substrat en matière plastique,
- pose d'un fil continu sur le substrat en matière plastique pour générer au moins une première plage de contact pour la connexion d'un premier composant électronique (2), une deuxième plage de contact (14B, 14C) pour la connexion d'un deuxième composant électronique (15) avec au moins deux surfaces de contact, et pour générer une ligne de connexion entre ces deux plages de contact, dans lequel le fil continu est de préférence respectivement posé en méandres dans lesdites plages de contact,
et
- génération d'une connexion électriquement conductrice entre les deux surfaces de contact du deuxième composant électronique (15) en appliquant un matériau électriquement conducteur sur les deux surfaces de contact du deuxième composant électronique (15) qui les connecte directement l'une à l'autre.

14. Procédé selon la revendication 13, dans lequel le matériau électriquement conducteur connectant directement les deux surfaces de contact du deuxième composant électronique (15) est un fil non isolé ou une ligne de pâte conductrice isotrope.

15. Procédé selon l'une des revendications 13 à 14, dans lequel au moins une deuxième plage de contact supplémentaire pour la connexion du deuxième composant électronique (15) est prévue sur le substrat en matière plastique, comprenant l'étape supplémentaire d'application d'un film anisotropiquement conducteur sur les au moins deux deuxièmes plages de contact pour établir une connexion électriquement conductrice formée perpendiculairement aux deuxièmes plages de contact avec deux surfaces de contact correspondantes du deuxième composant électronique (15).

16. Procédé selon l'une des revendications 11 à 15, dans lequel le film en matière plastique forme une feuille à usages multiples sur laquelle une pluralité des premières plages de contact et des deuxièmes plages de contact sont générées pour une pluralité d'agencements de contact (20).

17. Procédé de fabrication d'un support de données en forme de carte multicouche, ou d'un produit semi-fini pour un tel support de données, dans lequel un agencement de contact (20) est produit sur une surface intérieure d'une couche du support de données selon un procédé selon l'une des revendications 11 et 13.
